# EUROPÄISCHE PATENTSCHRIFT

(11) **EP 1 436 875 B1**
(45) Veröffentlichungstag und Bekanntmachung des Hinweises auf die Patenterteilung: **16.11.2011**
(21) Anmeldenummer: 02745029.5
(22) Anmeldetag: 11.07.2002
(51) Int. Cl.: H02H 9/04, H05K 9/00, H01C 7/12, H01C 1/06

(54) **SPANNUNGSBEGRENZER**
VOLTAGE LIMITER
LIMITEUR DE TENSION

(30) Priorität: 18.10.2001 EP 01811019
(43) Veröffentlichungstag der Anmeldung: 14.07.2004
(73) Patentinhaber: ABB Schweiz AG, 5400 Baden (CH)
(72) Erfinder: ZELLER, Peter, 4632 Pichl bei Wels (AT); SCHIETZSCH, Falko, CH-5035 Unterentfelden (CH); LIESNER, Jutta, D-91301 Forchheim (DE); HOFFARTH, Stephan, CH-5430 Wettingen (CH); RICHTER, Bernhard, CH-5430 Wettingen (CH)
(74) Vertreter: ABB Patent Attorneys
(86) Internationale Anmeldenummer: PCT/CH2002/000378
(87) Internationale Veröffentlichungsnummer: WO 2003/034565

(56) Entgegenhaltungen:
- CH-A- 644 730
- FR-A- 2 716 307
- US-A- 4 068 281
- US-A- 5 488 534

## Beschreibung

### TECHNISCHES GEBIET

Bei der Erfindung wird ausgegangen von einem Spannungsbegrenzer nach dem Oberbegriff von Patentanspruch 1. Dieser Spannungsbegrenzer dient dem Begrenzen von kurz- oder langzeitig anhaltenden Überspannungen. Er weist einen Varistor und einen parallel zum Varistor schaltbaren Entlastungspfad auf. Bei langandauernden Überspannungen wird eine im Entlastungspfad vorgesehene Schaltstelle betätigt und kommutiert ein beim Begrenzen der Überspannungen im Varistor geführter Strom in den Entlastungspfad.

### STAND DER TECHNIK

Mit dem Oberbegriff nimmt die Erfindung auf einen Stand der Technik von Spannungsbegrenzem Bezug, wie er in US 4,068,281 A beschrieben ist. Die beschriebene Begrenzungsvorrichtung weist einen Varistor 10 auf, zu dem ein Entlastungspfad mit einem Halbleiterschalter 16 parallel gelegt ist. Beim Auftreten einer langandauemden Überspannung führt der Varistor Strom, welcher nach einer vorgegebbaren Zeitverzögerung durch Kurzschliessen des Halbleiterschalters in den Entlastungspfad kommutiert. Das Kurzschliessen wird über einen den Halbleiterschalter in Abhängigkeit von der Varistortemperatur nach Ablauf der Zeitverzögerung einschaltenden NTC-Widerstand 15 erreicht.

Ein weiterer Spannungsbegrenzer ist FR 2,716,307A zu entnehmen. In Fig.2 dieser Schrift ist ein Spannungsbegrenzer dargestellt mit einer Funkenstrecke 2, zu der ein Entlastungspfad mit einem Halbleiterschalter 8 parallel geschaltet ist. Eine vom Betrieb der Funkenstrecke 2 abhängige Grösse, nämlich die Spannung über der Funkenstrecke, wird von einer Steuereinrichtung 9 erfasst und dient dem Kurzschliessen des Halbleiterschalters nach einer vorgegeben Zeitspanne.

Ein Spannungsbegrenzer mit mehreren spannungsbegrenzenden Elementen ist in DE 41 24 321 A1 beschrieben. Wird während des Betriebs eines dieser Elemente überlastet, so wird von diesem Element auf ein nächstes spannungsbegrenzendes Element umgeschaltet. Da das zugeschaltete spannungsbegrenzende Element bei langzeitig wirkenden Überspannungen ebenfalls schnell überlastet ist, ist dieser Begrenzer für langzeitig einwirkende Überspannungen nicht geeignet.

### DARSTELLUNG DER ERFINDUNG

Die Erfindung, wie sie in den Patentansprüchen definiert ist, löst die Aufgabe, einen Spannungsbegrenzer der eingangs genannten Art anzugeben, welcher sich durch kompakten Aufbau und durch hohe Zuverlässigkeit auch unter erschwerten Betriebsbedingungen auszeichnet.

Der Spannungsbegrenzer nach der Erfindung weist ein axialsymmetrisch ausgeführtes Gehäuse mit mindestens zwei in Achsrichtung voneinander beabstandeten Räumen auf, von denen in einem ersten der Varistor und im zweiten die Schaltstelle angeordnet ist. Sie enthält ferner einen auf definiertem Potential befindlichen dritten Raum, in dem Mittel zum Betätigen der Schaltstelle untergebracht sind. Durch Anordnung der Komponenten des Spannungsbegrenzers in separaten Räumen wird eine kompakte, modulare Bauweise erreicht. Zugleich ist so sichergestellt, das die energiebelasteten Komponenten des Spannungsbegrenzers, nämlich der Varistor und die Schaltstelle örtlich voneinander getrennt sind und so unabhängig voneinander gekühlt werden können. Dadurch, dass die im allgemeinen elektronisch wirkenden Betätigungsmittel in einem elektromagnetisch geschirmten Raum untergebracht sind, wird die Betriebssicherheit des Spannungsbegrenzers ganz wesentlich erhöht. Es werden so vor allem unerwünschte hochenergetische elektromagnetische Störungen von diesem Raum ferngehalten.

Ein besonders kompakter Aufbau und zugleich eine besonders gute elektromagnetische Verträglichkeit wird erreicht, wenn der dritte Raum zwischen dem ersten und dem zweiten Raum angeordnet ist und als Betätigungsmittel eine Steuereinrichtung enthält mit Eingängen für mindestens ein betriebsgrössenabhängiges Signal sowie für gegebenenfalls vorgesehene weitere betriebsgrössenabhängige Signale, mit einer Schaltbedingungen überprüfenden und ein Schaltsignal erzeugenden Triggereinheit, einen auf die Schaltstelle wirkenden Ausgang, eine die betriebsgrössenabhängigen Signale aufbereitende Signalverarbeitungseinheit und /oder einen das Schaltsignal verstärkenden Verstärker. Durch eine solche Steuereinrichtung kann die Bildung des Schaltsignals unabhängig von störenden elektromagnetischen Störfeldern sehr genau kontrolliert werden. Durch Aufbereitung der zugeführten Signale in der Signalverarbeitungseinheit und/oder durch Verstärkung des Schaltsignals im Verstärker kann die Genauigkeit des Prozesses zusätzlich verbessert werden. Eine weitere Verbesserung wird erreicht durch Eingänge für zusätzliche, vorzugsweise externe Eingangssignale sowie durch eine in die Triggereinheit integrierte Elektronik oder Recheneinheit zur Verknüpfung der betriebsgrössenabhängigen und der zusätzlichen Eingangssignale nach einem von den Schaltbedingungen bestimmten Steueralgorithmus. Ein solcher Spannungsbegrenzer kann mit besonderem Vorteil im Bahnbetrieb eingesetzt werden, da dort trotz des Auftretens starker Störfelder auch bei der Lösung komplexer Begrenzungsaufgaben ein äusserst genaues und zuverlässiges Arbeiten des Spannungsbegrenzers notwendig ist.

Als Betriebsgrösse kommen vor allem ein vom Varistor geführter Strom, das Magnetfeld dieses Stroms, eine am Varistor anstehende Restspannung und/oder die Temperatur des Varistors in Betracht. Bei Wahl der Restspannung als Betriebsgrösse weist die Steuervorrichtung ein oberhalb eines Grenzwerts der Restspannung aktivierbares und als Spannungsteiler oder Spannungsbegrenzer ausgeführtes Triggerelement auf, bei Wahl des Varistorstroms oder dessen Magnetfeld als Betriebsgrösse hingegen ein oberhalb eines Grenzwerts des Stroms oder des Magnetfelds aktivierbares und als stromstärke - oder magnetfeldstärkeabhängiger Schalter ausgeführtes Triggerelement und bei Wahl der Varistortemperatur als Betriebsgrösse ein oberhalb eines Grenzwerts der Temperatur aktivierbares und als temperaturabhängiger Schalter ausgeführtes Triggerelement.

In konstruktiv einfacher Weise sind der erste und der zweite Raum zwischen je zwei von vier axial voneinander beabstandeten und senkrecht zur Symmetrieachse ausgerichteten, stromleitenden Platten angeordnet. Hierbei bilden zwei äussere der Platten jeweils einen von zwei Stromanschlüssen der Anordnung und sind zwei dazwischenliegende innere Platten gegeneinander elektrisch isoliert und jeweils mit einem der beiden Stromanschlüsse der Anordnung sowie mit einem von zwei Stromanschlüssen des Varistors und der Schaltstelle elektrisch leitend verbunden. Werden nun eine erste der zwei äusseren Platten und eine erste der zwei inneren Platten mittels erster Schrauben und eine zwischen der ersten äusseren und der ersten inneren angeordnete zweite innere Platte und eine zweite der äusseren Platten mittels zweiter Schrauben in elektrisch leitender Weise miteinander verspannt, so kann mit bereits vorhandenen Tragelementen des Begrenzergehäuses und ohne zusätzliche Halteteile ein gut wirkender Schutz gegen externe mechanische Einwirkungen erreicht werden.

Zweckmässigerweise sind die ersten Schrauben durch Öffnungen in der zweiten inneren Platte und die zweiten Schrauben durch Öffnungen in der ersten inneren Platte geführt, welche Öffnungen gegenüber den Schrauben Übermass aufweisen. Ein derart ausgebildeter Spannungsbegrenzer lässt sich besonders einfach herstellen, da dessen auf unterschiedliche elektrische Potentiale führbaren Teile leicht gegeneinander elektrisch isoliert werden können. Als Isolationsmittel dienen eine flächige Isolation, welche zwischen einer der beiden äusseren und einer der beiden inneren Platten vorgesehen ist, und eine die beiden inneren Platten einbettende und sich zwischen den beiden äusseren Platten erstreckende Isolation, welche mit Vorteil von einer gehärteten Vergussmasse gebildet ist.

Vorzugsweise ist der elektrisch und magnetisch geschirmte dritte Raum von der ersten inneren Platte begrenzt sowie von einer auf deren elektrischen Potential gehaltenen und mit einem Stromanschluss des Varistors elektrisch leitend verbundenen Zwischenplatte. Der die Betätigungsmittel enthaltende dritte Raum ist dann aufgrund der Bildung eines Faradayschen Käfigs besonders wirksam vor elektromagnetischer Beeinflussung geschützt.

Eine wesentliche Hilfe bei der Montage des Spannungsbegrenzers wird dadurch erreicht, dass in die erste innere Platte ein in den zweiten Raum geführter Zentrierstift eingelassen ist. Dieser Zentrierstift hält die im allgemeinen mindestens einen Leistungshalbleiter aufweisende Schaltstelle bei der Fertigung des Spannungsbegrenzers und nach seiner Fertigstellung an einem definierten Platz.

### BESCHREIBUNG DER ZEICHNUNGEN

Die Erfindung wird nachstehend anhand von den Figuren erläutert, wobei Figuren 1-10 unterschiedliche Beispiele einer Anordnung zum Begrenzen von Überspannungen darstellen und Figuren 10-12 Ausführungsbeispiele der Erfindung darstellen.
- Fig. 1: ein Prinzipschaltbild der erfindungsgemässen Anordnung zum Begrenzen von kurz- oder langzeitig anhaltenden Überspannungen U mit einem Varistor und mit einem parallel zum Varistor geschalteten Entlastungspfad, welcher eine von einer Betriebsgrösse des Varistors steuerbare Schaltstelle aufweist,
- Fig. 2: ein Prinzipschaltschaitbild einer Ausführungsform eines Spannungsbegrenzers gemäss Fig.1, bei der als Betriebsgrösse zur Steuerung der Schaltstelle die von der Überspannung abhängige Restspannung U_{R} des Varistors verwendet wird,
- Fig.3: eine Prinzipdarstellung des am Spannungsbegrenzer gemäss Fig. 2 auftretenden Verlaufs der Restspannung U_{R}, eines durch die Überspannung U hervorgerufenen Stroms 1, eines im Varistor geführten Stroms I_{V} und eines durch die Schaltstelle fliessenden Stroms I_{S} jeweils in Abhängigkeit von der Zeit t,
- Fig. 4: ein Schaltbild einer Ausführungsform des Spannungsbegrenzers gemäss Fig. 2 für Wechselstromanwendungen mit einer zwei antiparallel geschaltete Thyristoren enthaltenden Schaltstelle,
- Fig. 5: ein Schaltbild einer Ausführungsform des Spannungsbegrenzers gemäss Fig. 2 für Gleichstromanwendungen mit einem Tyristor als Schaltstelle,
- Fig. 6: ein Schaltbild einer Ausführungsform eines weiteren Spannungsbegrenzers gemäss Fig. 2 für Wechselstromanwendungen mit einer zwei antiparallel geschaltete Thyristoren enthaltenden Schaltstelle,
- Fig. 7: ein Schaltbild einer Ausführungsform des Spannungsbegrenzers gemäss Fig. 1 für Gleichstromanwendungen mit einem Tyristor als Schaltstelle, bei der als Betriebsgrössen zur Steuerung der Schaltstelle der durch den Varistor fliessende Strom I_{V} und die Temperatur T des Varistors verwendet werden,
- Fig. 8: ein Schaltbild einer Ausführungsform des Spannungsbegrenzers gemäss Fig.1 für Wechselstromanwendungen mit einer antiparallelen Thyristoranordnung als Schaltstelle, bei der als Betriebsgrössen zur Steuerung der Schaltstelle der durch den Varistor fliessende Strom I_{V} und die Temperatur T_{V} des Varistors verwendet werden,
- Fig. 9: ein Schaltbild einer Ausführungsform des Spannungsbegrenzers gemäss Fig.1 für Gleichstromanwendungen mit einem als IGBT als Schaltstelle, bei der als Betriebsgrössen zur Steuerung der Schaltstelle der durch den Varistor fliessende Strom I_{V} und die Temperatur T_{V} des Varistors verwendet werden,
- Fig. 10: ein Schaltbild einer Ausführungsform des Spannungsbegrenzers gemäss Fig.1 für Wechselstromanwendungen mit einer antiparallelen IGBT-Anordnung als Schaltstelle, bei der als Betriebsgrössen zur Steuerung der Schaltstelle der durch den Varistor fliessende Strom I_{V} und die Temperatur T_{V} des Varistors verwendet werden.
- Fig. 11: in perspektivischer Darstellung eine als Apparat realisierte Ausführungsform eines der Spannungsbegrenzer gemäss einer der Figuren 4, 6, 8 oder 10, bei der die sonst vorhandene Isolation entfernt wurde,
- Fig. 12: eine Seitenansicht des Spannungsbegrenzers gemäss Fig. 11, welche im Bereich zweier als Schaltstelle verwendeter Leistungshalbleiter zum Teil geschnitten dargestellt ist, und
- Fig. 13: eine Aufsicht auf einen längs XIII - XIII geführten Schnitt durch den Spannungsbegrenzer gemäss Fig. 11, bei dem nun jedoch die Isolation vorhanden ist.

### WEGE ZUR AUSFÜHRUNG DER ERFINDUNG

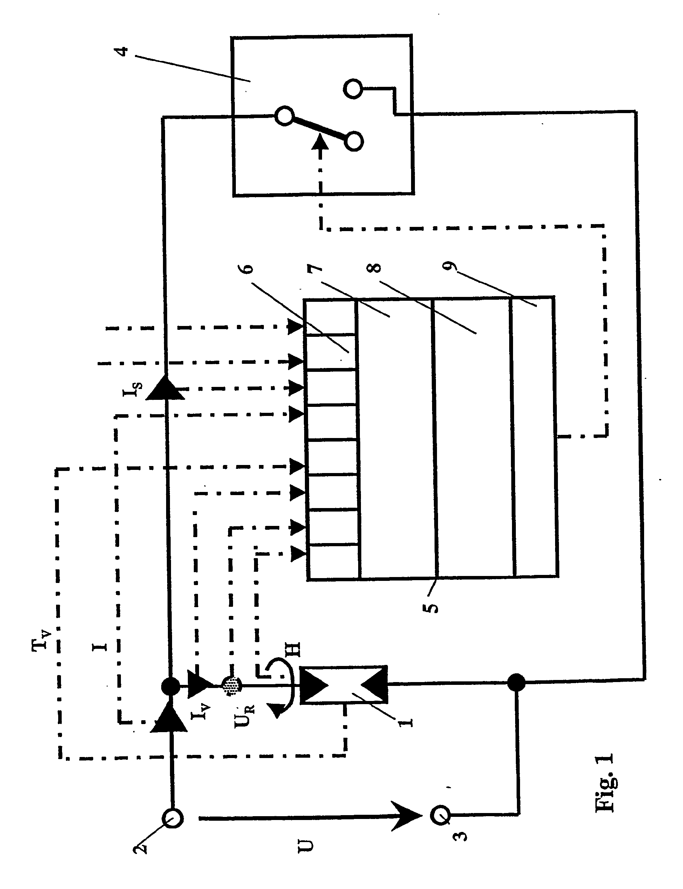

In den Figuren sind gleiche Teile mit gleichen Bezugszeichen gekennzeichnet. Der in Fig.1 dargestellte Spannungsbegrenzer weist ein spannungsbegrenzendes Element auf, welches als Varistor 1 ausgeführt ist und vorzugsweise Metalloxid, insbesondere Zinkoxid, enthält. Der Varistor 1 ist parallel geschaltet zu einer mit Überspannungen U beaufschlagbaren Strecke, welche von zwei auf unterschiedliches Potential bringbaren Stromanschlüssen 2, 3 begrenzt ist. Beide Stromanschlüsse können Teil einer elektrischen Anlage sein, können aber auch je einer von zwei verschiedenen elektrischen Anlagen, beispielsweise einer Rückstrom führenden Schiene einer elektrischen Bahn und einer in der Nähe der Schiene angeordneten Niederspannungsanlage, beispielsweise einem Fahrscheinautomaten, zugeordnet sein. Der Stromanschluss 2 ist elektrisch leitend verbunden mit einem der beiden Stromanschlüsse des Varistors 1 und mit einem beider Stromanschlüsse einer in einem parallel zum Varistor 1 geschalteten Entlastungspfad angeordneten Schaltstelle 4. Der Stromanschluss 3 und der andere der beiden Stromanschlüsse von Varistor 1 und Schaltstelle 4 befinden sich jeweils auf gleichem Potential. Zwischen dem Varistor und der Schaltstelle befinden sich Mittel, welche eine Betätigung der Schaltstelle, insbesondere deren Einschalten veranlasssen. Diese Betätigungsmittel umfassen nicht bezeichnete Sensoren zum Erfassen von Betriebsgrössen des Varistors und eine Steuereinrichtung 5, der die Ausgangssignale der Sensoren zugeführt werden, und die auf die Schaltstelle 4 wirkt. Solche Betriebsgrössen umfassen alle Messgrössen, die ein Erkennen der Überlastung des Varistors ermöglichen, wie insbesondere ein durch einen Stromsensor erfassbarer, im Varistor 1 geführter Strom I_{V}, das durch einen Magnetfeldsensor erfassbare magnetische Feld H dieses Stroms, eine am Varistor 1 anstehende Restspannung U_{R} und die mit einem Temperatursensor erfassbare Temperatur T_{V} des Varistors 1. Es kann lediglich eine der Betriebsgrössen auf die Schaltstelle 4 wirken. Zur Erhöhung der Redundanz kann es aber zweckmässig sein zwei und mehr der Betriebsgrössen auf die Schaltstelle 4 wirken zu lassen. Je nach Ausführungsform können die Sensoren in die Steuereinrichtung 5 integriert sein.

Die Steuereinrichtung 5 weist Eingänge 6 für die von den Sensoren ausgegebenen betriebsgrössenabhängigen Signale I_{V}, U_{R}, T_{V} und H und für gegebenenfalls vorgesehene weitere betriebsgrössenabhängige Signale auf. Solche weiteren Signale sind ein durch die Überspannung U hervorgerufener Strom 1 und ein im Entlastungspfad bzw. in der Schaltstelle 4 geführter Strom I_{S}, welcher sich mit dem Varistorstrom I_{V} zu dem durch die Überspannung hervorgerufenen Gesamtstrom 1 aufaddiert. Ferner sind Eingänge für zusätzliche Signale von externen Steuerleitungen vorgesehen. In einer Signalverarbeitungseinheit 7 der Steuereinrichtung 5 können die Eingangssignale aufbereitet werden. Aus den aufbereiteten Signale wird in einer Triggereinheit 8 unter Überprüfung von vorgegebenen Auslösebedingungen direkt oder indirekt mit Hilfe eines die aufbereiteten Eingangssignale in einer Recheneinheit oder in einer Elektronik bewertenden Algorithmus ein Einschaltsignal für die Schaltstelle gebildet. Das Schaltsignal kann in einem Verstärker 9 verstärkt werden und kann über einen Ausgang der Steuereinrichtung 5 an ein Steuerelement der Schaltstelle 4 geführt werden.

Die Schaltstelle 4 kann als elektromechanisches Schaltgerät ausgebildet sein, wird im allgemeinen aber einen Leistungshalbleiter enthaltenden Halbleiterschalter aufweisen. Geeignete Leistungshalbleiter sind als Thyristor, Triac, Transistor, IGBT, GTO, MOS-Fet oder FET ausgeführt. Die einzelnen Leistungshalbleitertypen unterscheiden sich in der Belastbarkeit (Überlastverhalten, Spannungsbeanspruchung, zulässige Stromanstiegsgeschwindigkeit) und den Triggermethoden. Somit ergeben sich für spezifische Anwendungen unterschiedliche Vorteile für jeden Halbleitertyp, so dass der Anwendung entsprechend der optimale Typ evaluiert werden kann. Je nach verwendetem Leistungshalbleiter sind typischenspezifische Schutzbeschaltungen (z.B. TSE Schutzbeschaltung für einen Thyristor) und Abschaltkreise (z.B. Kommutierungshilfskreis für einen Thyristor) zu integrieren. Für Wechselstromanwendungen wird der Halbleiterschalter im allgemeinen birektional ausgebildet sein und zwei antiparallel geschaltete gleichartige Leistungshalbleiter enthalten, wohingegen für Gleichstromanwendungen lediglich ein Leistungshalbleiter oder zwei und mehr in einer Richtung gepolte Leistungshalbleiter verwendet werden.

Eine lediglich kurzzeitig andauernde Überspannung mit geringem Energieinhalt wird vom Varistor 1 begrenzt. Eine langandauernde Überspannung mit hohem Energieinhalt wird ebenfalls zunächst vom Varistor 1 begrenzt. Bevor die Belastung des Varistors zu gross wird, wird in der Steuereinrichtung 5 oberhalb eines Grenzwertes mindestens eines von einer der Betriebsgrössen I_{V}, U_{R}, T_{V}, H des Varistors abhängigen Signals ein Schaltsignal gebildet, welches ein Kurzschliessen der eine grössere Dauerstrombelastbarkeit als der Varistor aufweisenden Schaltstelle bewirkt, sofern das betriebsgrössenabhängige Signal nach einer vorgegebenen Zeitspanne noch oberhalb des Grenzwertes liegt.

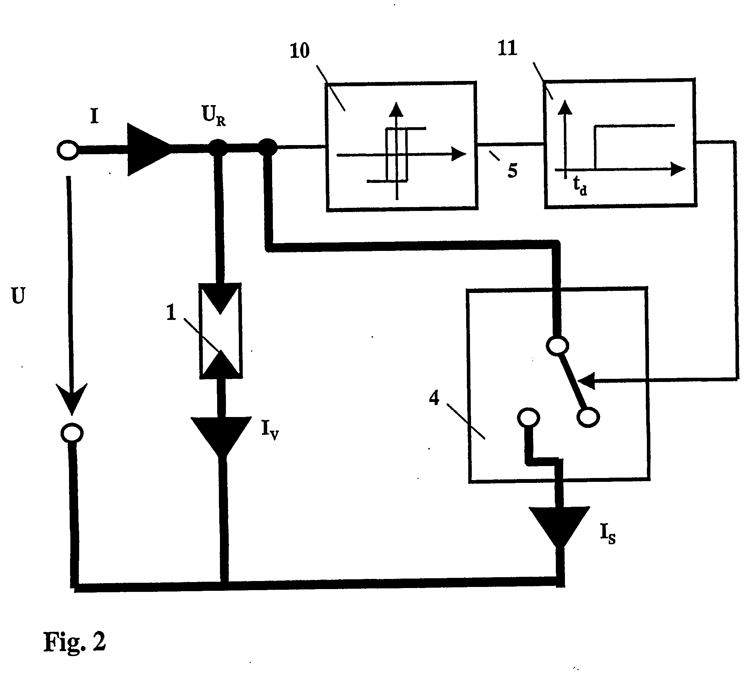

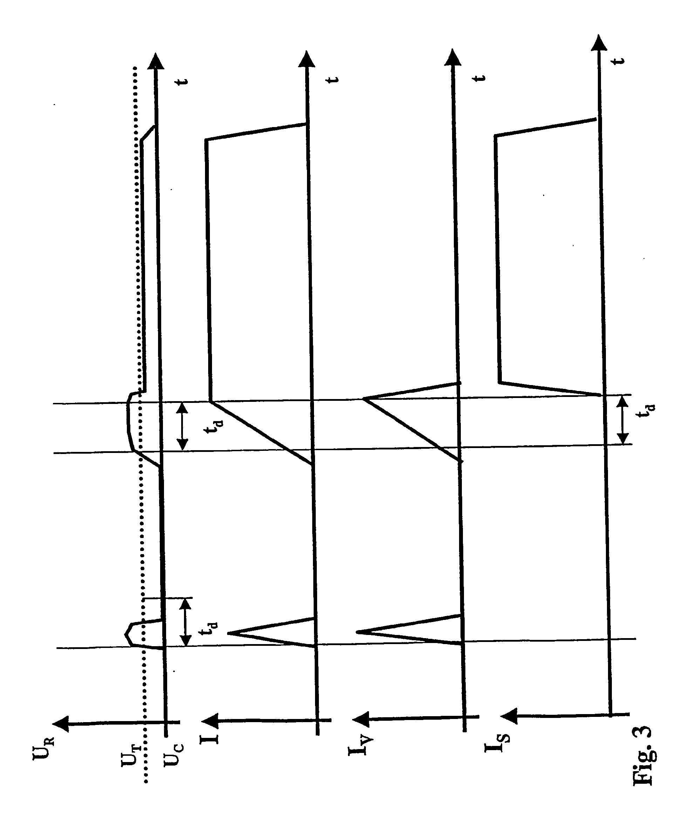

Anhand der Fig.2 und 3 wird dieses Prinzip an einem Spannungsbegrenzer erläutert, bei dem als Betriebsgrösse zur Steuerung der Schaltstelle 4 die der Überspannung entsprechende Restspannung U_{R} des Varistors verwendet wird. Die mit dem die Restspannung U_{R} führenden Stromanschluss des Varistors 1 einerseits und dem Steuerelement der Schaltstelle 4 andererseits elektrisch leitende verbundene Steuereinrichtung 5 dieses Spannungsbegrenzers weist in Serie geschaltet ein Triggerelement 10 und ein Zeitverzögerungselement 11 mit einer über eine Zeitspanne t_{d} wirkenden Zeitverzögerung auf.

Tritt eine kurzzeitig wirkende Überspannung auf (linker Teil von Fig. 3), so wird der Varistor 1 oberhalb eines vorbestimmten Werts U_{C} der Überspannung leitend und führt dann einen Strom I_{V}. Überschreitet die Überspannung einen weiteren vorbestimmten Wert Spannungswert U_{T}, so gibt das Triggerelement 10 ein Triggersignal ab und wird zugleich das Zeitverzögerungselement 11 aktiviert. Fällt die Überspannung U innerhalb der Zeitspanne t_{d} wieder unter den Wert U_{T}, so verschwindet das Triggersignal noch in dieser Zeitspanne. Die Überspannung wird dann ohne die Gefahr einer Überlastung ausschliesslich durch den Varistor 1 begrenzt. Handelt es sich hingegen um eine langzeitig wirkende und möglicherweise langssam ansteigende Überspannung (rechter Teil von Fig.3), so bleibt das vom Triggerelement 10 abgegebene Triggersignal über die ganze Zeitspanne t_{d} erhalten. Nach Ablauf der Zeitspanne gelangt das Triggersignal über das Zeitverzögerungselement 11 als Schaltsignal an die Schaltstelle 4 und schliesst diese unter Bildung des Entlastungspfads. Der im Varistor 1 geführte Strom I_{V} kommutiert nun in den die Schadstelle 4 enthaltenden Entlastungspfad. Da die Schaltstelle 4 dauerstromfest ausgebildet ist, kann sie den Strom über einen grossen Zeitraum führen, ohne sich unzulässig hoch zu erwärmen. Dennoch gegebenenfalls anfallende Überschusswärme kann über zusätzlich vorgesehene Kühlelemente weggeführt werden.

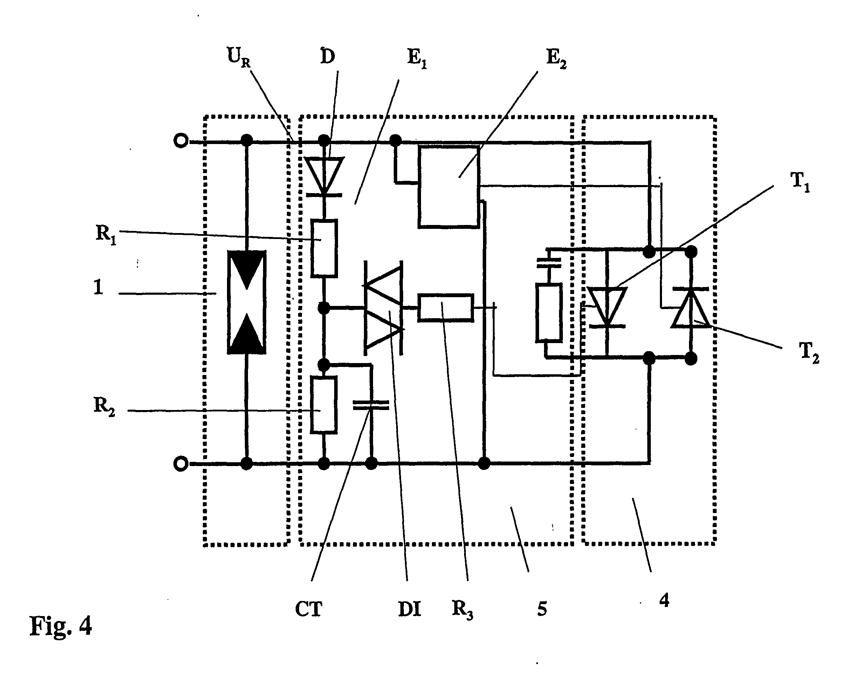

Bei der aus Fig. 4 ersichtlichen Ausführungsform des Spannungsbegrenzers wird die Restspannung U_{R} des Varistors 1 zur Steuerung der als bidirektionaler Schalter mit zwei antiparallel geschalteten Thyristoren T₁ und T₂ ausgebildeten Schaltstelle 4 verwendet. Die Restspannung U_{R} des Varistors 1 wird in der positiven Halbwelle der Restspannung über eine Diode D von einem parallel zu den Stromanschlüssen des Varistors 1 geschalteten Spannungsteiler mit ohmschen Widerständen R₁ und R₂ einer Elektronik E₁ der Steuerschaltung 5 erfasst. Während der positiven Halbwelle der Restspannung wird die um den Teilerfaktor des Spannungsteilers verringerte Restspannung über ein Diac DI und einen ohmschen Widerstand R₃ dem Gateanschluss des Thyristors T₁ zugeführt. Ein parallel zum Widerstand R₂ gelegter Ladekondensator CT der Elektronik E₁ lädt sich dann auf. Steht nach der Zeitspanne t_{d} (Fig.3) die Restspannung immer noch an, so ist der Kondensator CT auf eine Spannung aufgeladen, welche ausreicht, das Diac zu aktivieren und Strom vom Kondensator CT über den Widerstand R₃ zur Gatelektrode des Thyristors T₁ zu führen. Der Gatestrom wird durch den Widerstand R₃ begrenzt und bewirkt ein Durchzünden des Thyristors T₁ und damit eine Entlastung des parallel zum Thyristor T₁ liegenden Varistors 1.

Eine aus Fig. 4 ersichtliche Elektronik E₂ ist entsprechend der Elektronik E₁ aufgebaut und bewirkt in der negativen Halbwelle der Restspannung das Aufladen eines dem Kondensator CT entsprechenden Kondensators und nach der Zeitspanne t_{d} bei noch vorhandener Restspannung das Durchzünden des Thyristors T₂. Eine für Thyristoren übliche, nicht näher bezeichnete RC-Schaltung schützt die Thyristoren T₁ und T₂ vor Überlastung.

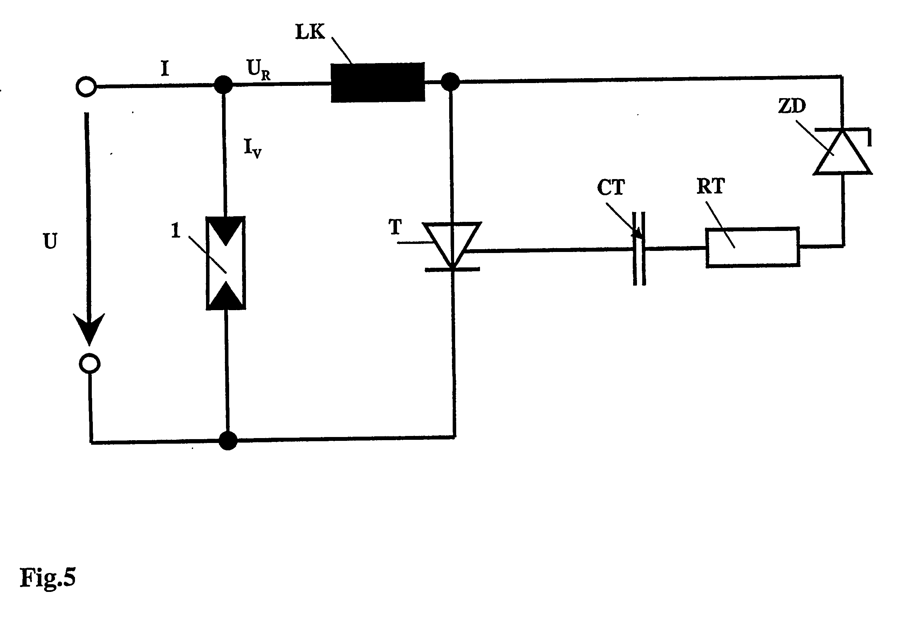

Auch bei der für Gleichstromanwendungen bestimmten Ausführungsform des Spannungswandlers gemäss Fig.5 wird die Restspannung U_{R} des Varistors 1 zur Steuerung der Schaltstelle verwendet. Die Schaltstelle ist als Thyristor T ausgebildet. Die Gatelektrode des Thyristors T wird über eine Zenerdiode ZD und eine damit in Serie liegende Reihenschaltung eines ohmschen Widerstands RT und einer Kapazität CT durch die Restspannung angesteuert. Ein Signal gelangt nur dann an den Thyristor T, wenn oberhalb des Spannungswerts U_{T} (Fig.3) die Zenerdiode ZD leitend wird und auch nach einer durch das RC-Glied bestimmten Zeitverzögerung noch leitend geblieben ist. Durch eine Schutzdrossel LK ist sichergestellt, dass der Anstieg des Stroms I_{S} durch die Schaltstelle während der Kommutierung des Varistorstroms I_{V} vom Varistor 1 in den Entlastungspfad kontrolliert erfolgt. Der Thyristor T wird so vor zu grossen Stomsteilheiten geschützt.

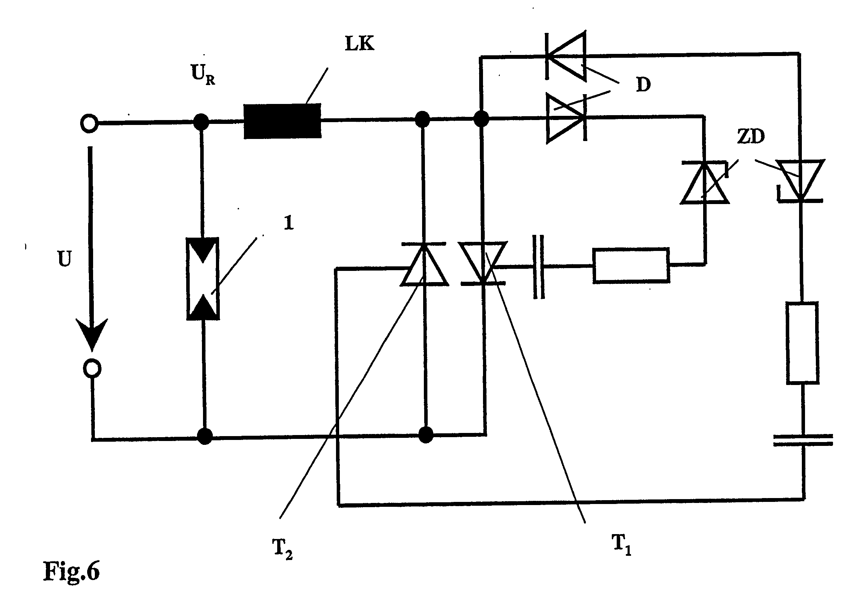

Bei der für Wechselstromanwendungen bestimmten Ausführungsform gemäss Fig.6 ist die Schaltstelle 4 wieder als Thyristoranordnung mit zwei antiparallel geschalteten Thyristoren T₁ und T₂ ausgebildet. Jeder dieser beiden Thyristoren ist entsprechend dem Thyristor T der Ausführungsform gemäss Fig.4 mit der Zenerdiode ZD und dem RC-Glied beschaltet. Zwei antiparallel geschaltete und jeweils einer der beiden Zenerdioden vorgeschaltete Dioden D sorgen dafür, dass jeweils nur eine Halbwelle des der Restspannung U_{R} entsprechenden Signals an die Zenerdiode ZD weitergeführt wird.

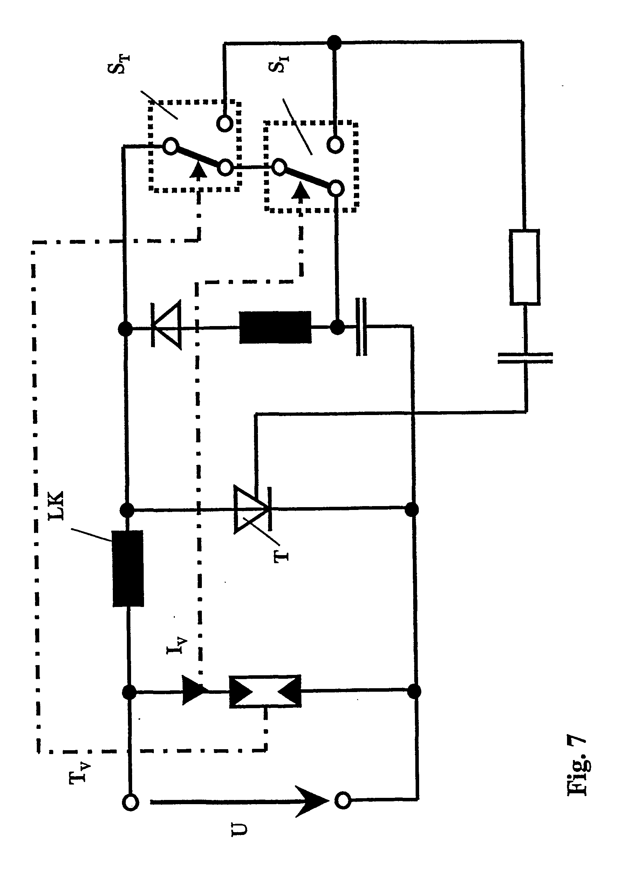

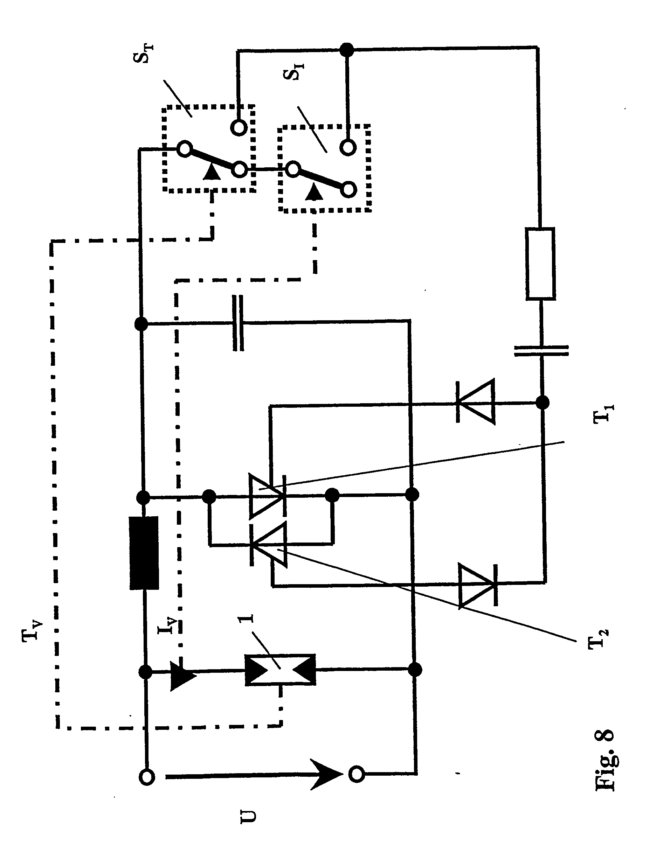

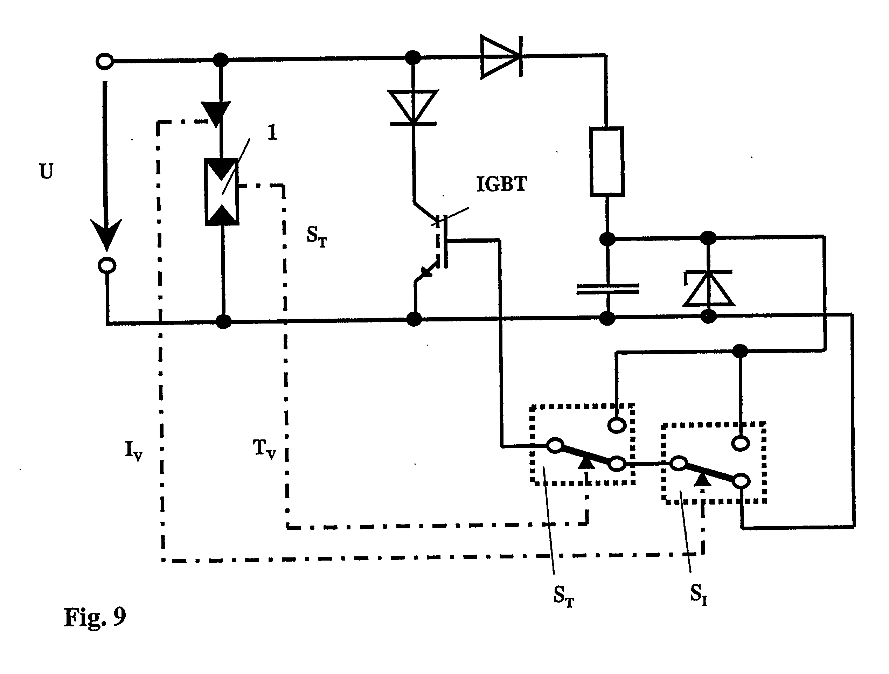

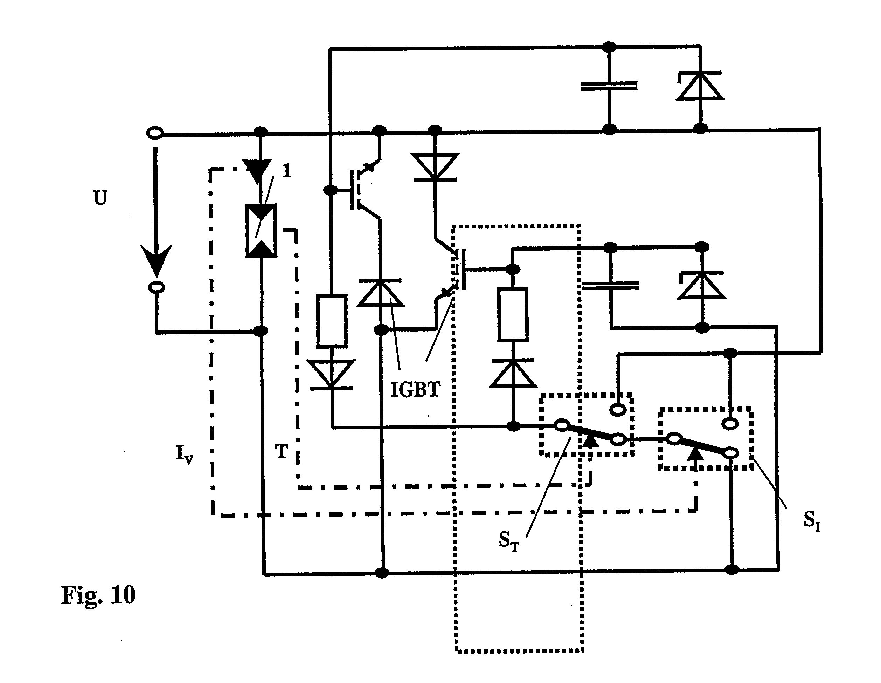

Bei den Ausführungsformen nach den Figuren 7 bis 10 werden im Unterschied zu den Ausführungsformen nach den Figuren 2, 4, 5 und 6 als Betriebsgrössen zur Betätigung der Schaltstelle 4 der Varistorstrom I_{V} und die Temperatur T_{V} des Varistors verwendet. Anstelle der Zenerdiode ZD sind nun als Triggerelement ein oberhalb eines Grenzwerts des Stroms oder des Magnetfelds aktivierbarer, stromstärke - oder magnetfeldstärkeabhängiger Schalter S₁ und ein oberhalb eines Grenzwerts der Temperatur T_{V} aktivierbarer, temperaturabhängiger Schalter S_{T} vorgesehen. Bei den für Gleichstromanwendungen vorgesehenen Ausführungsformen nach Fig.7 bzw. 9 ist als Schaltstelle 4 ein Thyristor T bzw. ein IGBT vorgesehen. Bei den für Wechselstromanwendungen vorgesehenen Ausführungsformen nach den Figuren 8 und 10 ist als Schaltstelle 4 eine Anordnung mit zwei antiparallel geschalteten Thristoren T₁ und T₂ bzw. eine Anordnung mit zwei antiparallel geschalteten Insulated Gate Bipolar Junction Transistoren (IGBT) vorgesehen. Bei den Ausführungsformen nach den Figuren 9 und 10 mit einer mindestens einen IGBT enthaltenden Schaltstelle 4 kann die Schutzdrossel LK entfallen.

Wird beim Überschreiten eines Grenzwertes des Varistorstroms I_{V} voder der Varistortemperatur T_{V} einer beiden Schalter S₁ oder S_{T} geschlossen, so wird ein Auslösesignal an die Schaltstelle 4 weitergeleitet. Dadurch, dass zwei unabhängig voneinander wirkende Betriebsgrössen zur Bildung des Auslösesignals verwendet werden, wird die Redundanz des Spannungsbegrenzers erhöht.

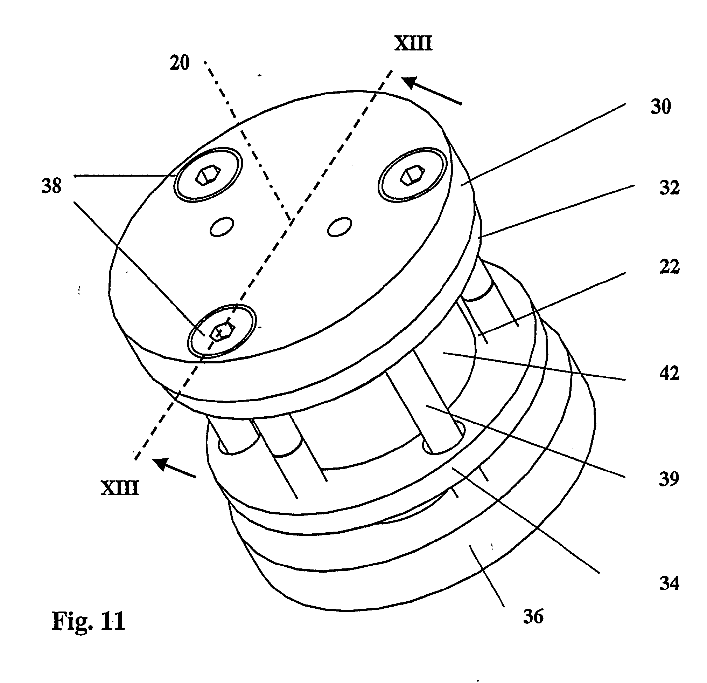

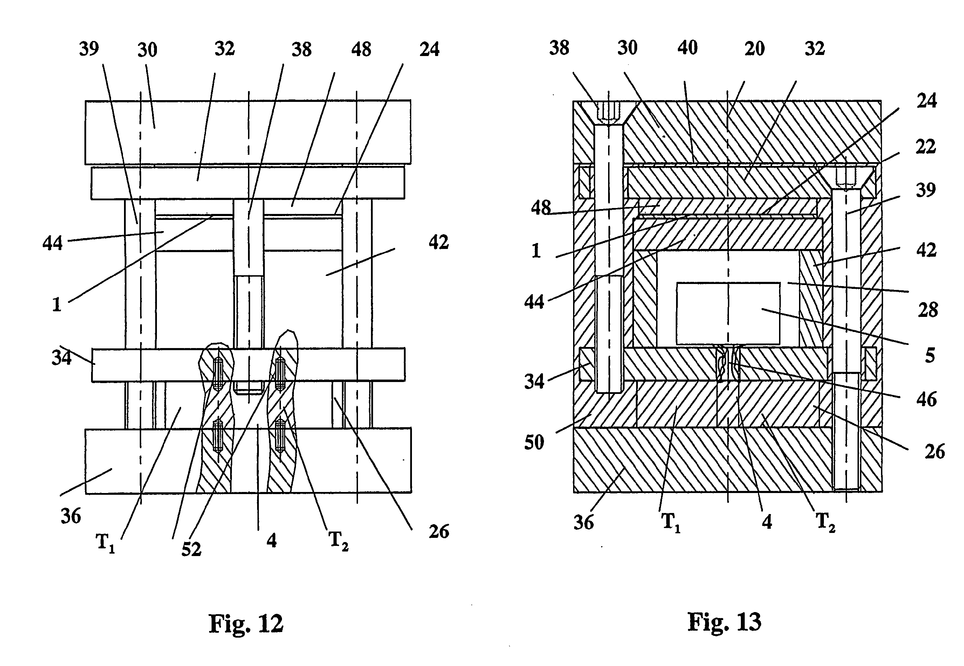

In den Figuren 11 bis 13 ist eine apparativ realisierte Ausführungsform des Spannungsbegrenzers gemäss einer der Figuren 4, 6, 8 oder 10 dargestellt, welche zur Aufnahme hoher Leistungen bestimmt ist. In den Figuren 11 und 12 wurde von einer Darstellung einer Isolation abgesehen. Erfindungsgemäß weist der Spannungsbegrenzer ein längs einer Achse 20 axialsymmetrisch ausgeführtes Gehäuse 22 auf mit zwei in in Achsrichtung voneinander beabstandeten Räumen 24 und 26 (Figuren 12 und 13), von denen in einem ersten 24 der als flache Kreisscheibe ausgebildete Varistor 1 und im zweiten 26 die Schaltstelle 4 mit zwei als Vollzylinder ausgebildeten Thyristoren T₁ und T₂ angeordnet ist. In einem auf definiertem Potential befindlichen, elektromagnetisch abgeschirmten dritten Raum 28 (Fig.13) sind die Steuereinrichtung 5 umfassende Betätigungsmittel untergebracht. Dieser dritte Raum ist zwischen dem Varistorraum 24 und dem Schaltstellenraum 26 angeordnet.

Aus den Figuren 12 und 13 ist ersichtlich, dass die Räume 24 und 26 zwischen je zwei von vier axial voneinander beabstandeten und senkrecht zur Symmetrieachse 20 ausgerichteten, stromleitenden Platten 30, 32, 34, 36 von kreisrundem Design angeordnet sind. Diese Platten bestehen aus einem Strom gut leitenden Material, wie beispielsweise Aluminium, Messing oder Kupfer, einer mindestens eines dieser Elemente enthaltenden Legierung oder Stahl. Zwei äussere dieser Platten, nämlich die Platten 30 und 36, weisen einen grösseren Durchmesser auf als die beiden innen liegenden Platten 32 und 34 und bilden jeweils einen der zwei Stromanschlüsse des Spannungsbegrenzers. Die dazwischenliegenden innere Platten 32 und 34 sind gegeneinander elektrisch isoliert und jeweils mit einem der beiden Stromanschlüsse der Anordnung sowie mit einem von zwei Stromanschlüssen des Varistors 1 und der Schaltstelle 4 elektrisch leitend verbunden. Die Platten 30 und 34 sind mittels dreier Schrauben 38 und die zwischen diesen beiden Platten angeordnete Platte 32 und Platte 36 mittels dreier Schrauben 39 in elektrisch leitender Weise miteinander verspannt. Die Schrauben 38 sind durch nicht bezeichnete Öffnungen in der Platte 32 und die Schrauben 39 durch nicht bezeichnete Öffnungen der Platte 34 geführt, welche Öffnungen gegenüber den Schrauben Übermass aufweisen.

Der Raum 28 ist begrenzt von der Platte 34, einem auf der Platte 34 fussenden metallenen Hohlzylinder 42 und einer auf den Hohlzylinder 42 abgestützten und einen Stromanschluss des Varistors 1 bildenden elektrisch leitend Zwischenplatte 44. Da die Platte 34, der Zylinder 42 und die Zwischenplatte 44 miteinander in elektrisch leitender Verbindung stehen, befindet sich der Raum 28 auf einem definierten Potential und ist nach aussen praktisch vollkommen elektromagnetisch abgeschirmt. Lediglich in der Platte 34 ist eine nicht bezeichnete Öffnung vorgesehen, welche den Raum 28 mit dem Schaltstellenraum 26 verbindet und welche Versorgungs- und Signalleitungen 46 (Fig.13) aufnimmt, die die Stromversorgung der Steuereinrichtung 5 sicherstellen und den Signalfluss zwischen der Steuereinrichtung 5 und den Gatelektroden der Thyristoren T₁ und T₂ gewährleisten.

Zwischen den Platten 30 und 32 ist eine als ebene Schicht ausgeführte, flächige Isolation 40 (Fig.13) vorgesehen. Daher befinden sich die Platten 30 und 34, die Schrauben 38, der Hohlzylinder 42 und die Zwischenplatte 44 nach Anlegen von Wechselspannung an die durch die Platten 30 und 36 realisierten Stromanschlüsse des Spannungsbegrenzers auf gleichem Potential. Hingegen befinden sich dann die Platten 32, 36, die Schrauben 39 und eine die Platte 32 abstützende und als Stromanschluss des Varistors 1 dienende Zwischenplatte 48 auf gleichem Gegenpotential. Aus Fig. 13 ist ersichtlich, dass durch Einbetten der beiden inneren Platten 32 und 34, der Schrauben 38 und 39, der Zwischenplatten 44 und 48, des Hohlzylinders 42, des Varistors 1 und der Thyristoren T₁ und T₂ in eine elektrisch isolierende eine zwischen den beiden äusseren Platten 30 und 36 erstreckte Isolation 50 gebildet ist, welche einen sicheren Betrieb des Spannungsbegrenzers auch bei Belastung mit grossen Leistungen gewährleistet. Mit Vorteil wird die Isolation 50 durch Umgiessen des vormontierten, den Varistor, die Thyristoren und die Steuereinrichtung bereits aufnehmenden Gehäuses 22 mit einer Isolierharz, insbesondere auf der Basis Silicon, hergestellt. Da die die Schrauben 38 und 39 aufnehmenden Öffnungen gegenüber den Schrauben Übermass aufweisen, kann das flüssige Harz in die Öffnungen eindringen und beim nachfolgenden Härten eine Isolation zwischen den Schrauben und den die Öffnungen aufweisenden Platten bilden.

Aus Fig. 12 ist ersichtlich, dass in die Platten 34 und 36 Zentrierstifte 52 eingelassen sind, welche in den Raum 26 geführt sind. Diese Stifte halten die beiden Thyristoren T₁ und T₂ an vorgebenenen Stellen in Raum 26 und erleichtern die Montage des Spannungsbegrenzers erheblich.

### BEZUGSZEICHENLISTE

- 1: Varistor
- 2, 3: Stromanschlüsse
- 4: Schaltstelle
- 5: Steuereinrichtung
- 6: Eingänge
- 7: Signalverarbeitungseinheit
- 8: Triggereinheit
- 9: Verstärker
- 10: Triggerelement
- 11: Zeitverzögerungselement
- 20: Achse
- 22: Gehäuse
- 24, 26, 28: Räume
- 30, 32, 34, 36: stromleitende Platten
- 38, 39: Schrauben
- 40: flächige Isolation
- 42: Hohlzylinder
- 44, 48: Zwischenplatten
- 46: Versorgungs- und Signalleitungen
- 50: Isolation
- 52: Zentrierstifte
- I: Gesamtstrom
- I_{V}: Varistorstrom
- I_{S}: Strom in Schaltstelle
- U: Überspannung
- Uc: vorbestimmter Wert der Überspannung
- U_{R}: Restspannung
- U_{T}: Grenzwert der Restspannung
- T_{V}: Varistortemperatur
- H: Magnetfeld des Varistorstroms
- t_{d}: Zeitspanne
- T, T_{1,} T₂: Thyristoren
- D: Diode
- DI: Diac
- ZD: Zenerdiode
- IGBT: IGBT
- LK: Begrenzungsdrossel
- CT: Kapazität
- R₁, R₂, R₃, RT: ohmsche Widerstände
- E₁, E₂: Elektronik

## Patentansprüche

1. Anordnung zum Begrenzen von kurz- oder langzeitig anhaltenden Überspannungen (U) mit
einem Varistor (1),
einem parallel zum Varistor schaltbaren Entlastungspfad mit einer gegenüber dem Varistor eine grosse Dauerstrombelastbarkeit aufweisenden Schaltstelle (4), und
mit Mitteln zum Betätigen der Schaltstelle (4) oberhalb eines Grenzwertes (U_{T}) eines von einer Betriebsgrösse (I_{V}, U_{R}, T_{V}, H) des Varistors (1) abhängigen Signals,
**gekennzeichnet durch** ein axialsymmetrisch ausgeführtes Gehäuse (22) mit mindestens zwei in Achsrichtung (20) der Symmetrieachse voneinander beabstandeten Räumen (24, 28), von denen in einem ersten (24) der Varistor und im zweiten die Schaltstelle (26) angeordnet ist, und **durch**
einen elektromagnetisch geschirmten dritten Raum (28), in dem die Betätigungsmittel untergebracht sind.

2. Anordnung nach Anspruch 1, **dadurch gekennzeichnet, dass** der dritte Raum (28) zwischen dem ersten (24) und dem zweiten Raum (26) angeordnet ist und als Betätigungsmittel eine Steuereinrichtung (5) enthält mit Eingängen (6) für das mindestens eine betriebsgrössenabhängige Signal (I_{V}, U_{R}, T, H) sowie für gegebenenfalls vorgesehene weitere betriebsgrössenabhängige Signale (I, I_{S}), mit einer Schaltbedingungen überprüfenden und ein Schaltsignal erzeugenden Triggereinheit (8), mit einem auf die Schaltstelle wirkenden Ausgang, mit einer die betriebsgrössenabhängigen Signale aufbereitenden Signalverarbeitungseinheit (7) und /oder mit einem das Schaltsignal verstärkenden Verstärker (9).

3. Anordnung nach Anspruch 2, **dadurch gekennzeichnet, dass** die Steuereinrichtung (5) ferner Eingänge (6) für zusätzliche Eingangssignale aufweist sowie eine in die Triggereinheit (8) integrierte Elektronik oder Recheneinheit zur Verknüpfung der betriebsgrössenabhängigen (I_{V}, U_{R}, T, H) und der zusätzlichen Eingangssignale nach einem von den Schaltbedingungen bestimmten Steueralgorithmus.

4. Anordnung nach einem der Ansprüche 2 oder 3, **dadurch gekennzeichnet, dass** die Steuereinrichtung (5) ferner Eingänge (6) für zusätzliche Eingangssignale aufweist sowie eine in die Triggereinheit (8) integrierte Elektronik oder Recheneinheit zur Verknüpfung der betriebsgrössenabhängigen (I_{V}, U_{R}, T, H) und der zusätzlichen Eingangssignale nach einem von den Schaltbedingungen bestimmten Steueralgorithmus.

5. Anordnung nach einem der Ansprüche 1 bis 4, **dadurch gekennzeichnet, dass** die mindestens eine Betriebsgrösse ein vom Varistor geführter Strom (I_{V}), das Magnetfeld (H) dieses Stroms, eine am Varistor anstehende Restspannung (U_{R}) und/oder die Temperatur (T_{V}) des Varistors (1) ist.

6. Anordnung nach Anspruch 5, **dadurch gekennzeichnet, dass** die Schaltstelle (4) einen von der Steuereinrichtung (5) ansteuerbaren Leistungshalbleiter aufweist .

7. Anordnung nach Anspruch 6, **dadurch gekennzeichnet, dass** bei Wahl der Restspannung (U_{R}) als Betriebsgrösse die Steuervorrichtung (5) ein oberhalb eines Grenzwerts (U_{T}) der Restspannung aktivierbares und als Spannungsteiler oder Spannungsbegrenzer ausgeführtes Triggerelement (10) aufweist.

8. Anordnung nach Anspruch 6 oder 7, **dadurch gekennzeichnet, dass** bei Wahl des Varistorstroms (I_{V}) oder dessen Magnetfeld (H) als die Steuervorrichtung (5) ein oberhalb eines Grenzwerts des Stroms oder des Magnetfelds aktivierbares und als stromstärke - oder magnetfeldstärkeabhängiger Schalter (S₁) ausgeführtes Triggerelement aufweist.

9. Anordnung nach einem der Ansprüche 6 bis 8, **dadurch gekennzeichnet, dass** bei Wahl der Varistortemperatur (T_{V}) als Betriebsgrösse die Steuervorrichtung (5) ein oberhalb eines Grenzwerts der Temperatur aktivierbares und als temperaturabhängiger Schalter (S_{T}) ausgeführtes Triggerelement aufweist.

10. Anordnung nach einem der Ansprüche 2 bis 9, **dadurch gekennzeichnet, dass** der erste (24) und der zweite Raum (26) zwischen je zwei von vier axial voneinander beabstandeten und senkrecht zur Symmetrieachse (20) ausgerichteten, stromleitenden Platten (30, 32, 34, 36) angeordnet sind, von welchen Platten zwei äussere (30, 36) jeweils einen von zwei Stromanschlüssen der Anordnung bilden und zwei dazwischenliegende innere Platten (32, 34) gegeneinander elektrisch isoliert und jeweils mit einem der beiden Stromanschlüsse der Anordnung sowie mit einem von zwei Stromanschlüssen des Varistors (1) und der Schaltstelle (4) elektrisch leitend verbunden sind.

11. Anordnung nach Anspruch 10, **dadurch gekennzeichnet, dass** eine erste (30) der zwei äusseren Platten (30, 36) und eine erste (34) der zwei inneren Platten (32, 34) mittels erster Schrauben (38) und eine zwischen der ersten äusseren (30) und der ersten inneren (34) angeordnete zweite innere Platte (32) und die zweite der äusseren Platten (36) mittels zweiter Schrauben (39) in elektrisch leitender Weise miteinander verspannt sind.

12. Anordnung nach Anspruch 11, **dadurch gekennzeichnet, dass** die ersten Schrauben (38) durch Öffnungen in der zweiten inneren Platte (32) und die zweiten Schrauben (39) durch Öffnungen der ersten inneren Platte (34) geführt sind, welche Öffnungen gegenüber den Schrauben Übermass aufweisen.

13. Anordnung nach Anspruch 12, **dadurch gekennzeichnet, dass** der dritte Raum (28) elektromagnetisch geschirmt ist von der ersten inneren Platte (34) und einer mit einem Stromanschluss des Varistors (1) elektrisch leitend verbundenen Zwischenplatte (44).

14. Anordnung nach Anspruch 13, **dadurch gekennzeichnet, dass** in die erste innere Platte (34) ein in den zweiten Raum (26) geführter Zentrierstift (52) eingelassen ist.

15. Anordnung nach einem der Ansprüche 10 bis 14, **dadurch gekennzeichnet, dass** zwischen einer der beiden äusseren (30) und einer der beiden inneren Platten (32) eine flächige Isolation (40) vorgesehen ist, und dass die beiden inneren Platten (32, 34) in eine sich zwischen den beiden äusseren Platten (30, 36) erstreckende Isolation (50) eingebettet sind.

## Claims

1. Arrangement for limiting short-term or long-term overvoltages (U) having
a varistor (1),
a discharge path which can be connected in parallel with the varistor and has a switching point (4) whose uninterrupted current load capacity is greater than that of the varistor, and
having means for operating the stitching point (4) above a limit value (U_{T}) of a signal which is dependent on an operating variable (I_{V}, U_{R}, T_{V}, H) of the varistor (1),
**characterized by** an axially symmetrical housing (22) having at least two areas (24, 28), which are at a distance from one another in the axial direction (20) of the axis of symmetry and of which the varistor is arranged in a first area (24) and the stitching point (26) is arranged in the second area, and by
an electromagnetically shielded third area (28), in which the operating means are accommodated.

2. Arrangement as claimed in Claim 1, **characterized in that** the third area (28) is arranged between the first area (24) and the second area (26) and contains a control device (5) as the operating means, with inputs (6) for the at least one signal (I_{V}, U_{R}, T, H) which is dependent on an operating variable, and for further signals (I, I_{S}), which may be provided and are dependent on an operating variable, having a trigger unit (8) which checks switching conditions and produces a switching signal, having an output which acts on the stitching point, having a signal processing unit (7) which processes the signals which are dependent on an operating variable, and/or having an amplifier (9) which amplifies the stitching signal.

3. Arrangement as claimed in Claim 2, **characterized in that** the control device (5) furthermore has inputs (6) for additional input signals, as well as electronics or a computation unit, which is integrated in the trigger unit (8), for linking the signals (I_{V}, U_{R}, T, H) which are dependent on an operating variable and the additional input signals in accordance with a control algorithm which is determined by the stitching conditions.

4. Arrangement as claimed in one of Claims 2 or 3, **characterized in that** the control device (5) furthermore has inputs (6) for additional input signals, as well as electronics or a computation unit, which is integrated in the trigger unit (8), for linking the signals (I_{V}, U_{R}, T, H) which are dependent on an operating variable and the additional input signals in accordance with a control algorithm which is determined by the stitching conditions.

5. Arrangement as claimed in one of Claims 1 to 4, **characterized in that** the at least one operating variable is a current (I_{V}) carried by the varistor, the magnetic field (H) of this current, a residual voltage (U_{R}) which is present across the varistor, and/or the temperature (T_{V}) of the varistor (1).

6. Arrangement as claimed in Claim 5, **characterized in that** the switching point (4) has a power semiconductor which can be driven by the control device (5).

7. Arrangement as claimed in Claim 6, **characterized in that**, if the residual voltage (U_{R}) is chosen as the operating variable, the control apparatus (5) has a trigger element (10) which can be activated above a limit value (U_{T}) of the residual voltage and is in the form of a voltage divider or voltage limiter.

8. Arrangement as claimed in Claim 6 or 7, **characterized in that**, if the varistor current (I_{V}) or its magnetic field (H) is chosen as the operating variable, the control apparatus (5) has a trigger element which can be activated above a limit value of the current or of the magnetic field and is in the form of a switch (S_{I}) which is dependent on the current density or magnetic field strength.

9. Arrangement as claimed in one of Claims 6 to 8, **characterized in that**, if the varistor temperature (T_{V}) is chosen as the operating variable, the control apparatus (5) has a trigger element which can be activated above a temperature limit value and is in the form of a temperature-dependent switch (S_{T}).

10. Arrangement as claimed in one of Claims 2 to 9, **characterized in that** the first area (24) and the second area (26) are arranged between in each case two of four current-carrying plates (30, 32, 34, 36), which are at an axial distance from one another and are aligned at right angles to the axis of symmetry (20), of which two outer plates (30, 36) each form one of two current connections of the arrangement, and two inner plates (32, 34), located between them, are electrically isolated from one another and are each electrically conductively connected to one of the two current connections of the arrangement and to one of two current connections of the varistor (1) and of the stitching point (4).

11. Arrangement as claimed in Claim 10, **characterized in that** a first (30) of the two outer plates (30, 36) and a first (34) of the two inner plates (32, 34) are braced with respect to one another in an electrically conductive manner by means of first screws (38), and a second inner plate (32), which is arranged between the first outer plate (30) and the first inner plate (34), and the second of the outer plates (36) are braced with respect to one another in an electrically conductive manner by means of second screws (39).

12. Arrangement as claimed in Claim 11, **characterized in that** the first screws (38) are passed through openings in the second inner plate (32), and the second screws (39) are passed through openings in the first inner plate (34), which openings are larger than the screws.

13. Arrangement as claimed in Claim 12, **characterized in that** the third area (28) is electromagnetically shielded from the first inner plate (34) and from an intermediate plate (44) which is electrically conductively connected to a current connection of the varistor (1).

14. Arrangement as claimed in Claim 13, **characterized in that** a centering pin (52), which is passed into the second area (26), is introduced into the first inner plate (34).

15. Arrangement as claimed in one of Claims 10 to 14, **characterized in that** flat insulation (40) is provided between one of the two outer plates (30) and one of the two inner plates (32), and **in that** the two inner plates (32, 34) are embedded in insulation (50) which extends between the two outer plates (30, 36).

## Revendications

1. Agencement destiné à limiter des surtensions (U) persistantes pendant une courte durée ou une longue durée comprenant
un varistor (1),
un chemin de décharge pouvant être commuté en parallèle avec le varistor avec un poste de commutation (4) présentant une grande capacité de charge de courant permanent par rapport au varistor, et
des moyens pour l'actionnement du poste de commutation (4) au-dessus d'une valeur limite (U_{T}) d'un signal dépendant d'une grandeur de service (I_{V}, U_{R}, T_{V}, H) du varistor (1),
**caractérisé par** un boîtier (22) réalisé avec une symétrie axiale avec au moins deux espaces (24, 28) espacés l'un de l'autre dans la direction d'axe (20) de l'axe de symétrie, espaces dans le premier desquels (24) le varistor est disposé et dans le deuxième desquels le poste de commutation (26) est disposé, et par
un troisième espace (28) blindé de façon électromagnétique, dans lequel les moyens d'actionnement sont logés.

2. Agencement selon la revendication 1, **caractérisé en ce que** le troisième espace (28) est disposé entre le premier espace (24) et le deuxième espace (26) et contient comme moyen d'actionnement un dispositif de commande (5) avec des entrées (6) pour le au moins un signal dépendant de grandeurs de service (I_{V}, U_{R}, T, H) et pour d'autres signaux (I, I_{S}) dépendants de grandeurs de service, éventuellement prévus, une unité de déclenchement (8) contrôlant des conditions de commutation et générant un signal de commutation, une sortie agissant sur le poste de commutation, une unité de traitement de signal (7) traitant les signaux dépendants de grandeurs de service et/ou un amplificateur (9) amplifiant le signal de commutation.

3. Agencement selon la revendication 2, **caractérisé en ce que** le dispositif de commande (5) présente également des entrées (6) pour des signaux d'entrée supplémentaires et une électronique ou une unité de calcul intégrée dans l'unité de déclenchement (8) pour l'enchaînement des signaux d'entrée dépendants de grandeurs de service (I_{V}, U_{R}, T, H) et des signaux d'entrée supplémentaires selon un algorithme de commande déterminé par les conditions de commutation.

4. Agencement selon l'une des revendications 2 ou 3, **caractérisé en ce que**
le dispositif de commande (5) présente également des entrées (6) pour des signaux d'entrée supplémentaires et une électronique ou une unité de calcul intégrée dans l'unité de déclenchement (8) pour l'enchaînement des signaux d'entrée dépendants de grandeurs de service (I_{V}, U_{R}, T, H) et des signaux d'entrée supplémentaires selon un algorithme de commande déterminé par les conditions de commutation.

5. Agencement selon l'une des revendications 1 à 4, **caractérisé en ce que** la au moins une grandeur de service est un courant (I_{V}) guidé par le varistor, le champ magnétique (H) de ce courant, une tension résiduelle (U_{R}) s'appliquant sur le varistor et/ou la température (T_{V}) du varistor (1).

6. Agencement selon la revendication 5, **caractérisé en ce que** le poste de commutation (4) présente un semi-conducteur de puissance pouvant être amorcé par le dispositif de commande (5).

7. Agencement selon la revendication 6, **caractérisé en ce que**, si l'on choisit la tension résiduelle (U_{R}) comme grandeur de service, le dispositif de commande (5) présente un élément déclencheur (10) pouvant être activé au-dessus d'une valeur limite (U_{T}) de la tension résiduelle et conçu comme diviseur de tension ou limiteur de tension.

8. Agencement selon la revendication 6 ou 7, **caractérisé en ce que**, si l'on choisit le courant de varistor (I_{V}) ou son champ magnétique (H) comme grandeur de service, le dispositif de commande (5) présente un élément de déclenchement pouvant être activé au-dessus d'une valeur limite de courant ou de champ magnétique et réalisé sous forme de commutateur (S₁) dépendant de l'intensité de courant ou de l'intensité de champ magnétique.

9. Agencement selon 1' une quelconque des revendications 6 à 8, **caractérisé en ce que**, si l'on choisit la température de varistor (T_{V}) comme grandeur de service, le dispositif de commande (5) présente un élément de déclenchement pouvant être activé au-dessus d'une valeur limite de la température et conçu comme interrupteur (S_{T}) dépendant de la température.

10. Agencement selon l'une des revendications 2 à 9, **caractérisé en ce que** le premier espace (24) et le deuxième espace (26) sont disposés entre à chaque fois deux de quatre plaques (30, 32, 34, 36) conductrices, espacées axialement les unes des autres et orientées perpendiculairement à l'axe de symétrie (20), plaques dont deux plaques extérieures (30, 36) forment respectivement un de deux branchements de courant de l'agencement et deux plaques (32, 34) intérieures intercalées sont isolées électriquement de façon réciproque et sont reliées de façon électroconductrice à chaque fois à l'un des deux branchements de courant de l'agencement et à un de deux branchements de courant du varistor (1) et du poste de commutation (4).

11. Agencement selon la revendication 10, **caractérisé en ce qu'**une première (30) des deux plaques extérieures (30, 36) et une première (34) des deux plaques intérieures (32, 34) sont bloquées mutuellement de façon électroconductrice au moyen de premières vis (38) et une seconde plaque intérieure (32), disposée entre la première plaque extérieure (30) et la première plaque intérieure (34), et la seconde des plaques extérieures (36) sont bloquées mutuellement de façon électroconductrice au moyen de secondes vis (39).

12. Agencement selon la revendication 11, **caractérisé en ce que** les premières vis (38) sont guidées à travers des ouvertures dans la seconde plaque intérieure (32) et les secondes vis (39) à travers des ouvertures de la première plaque intérieure (34), lesquelles ouvertures présentent une surcote par rapport aux vis.

13. Agencement selon la revendication 12, **caractérisé en ce que** le troisième espace (28) est blindé au niveau électromagnétique par la première plaque intérieure (34) et une plaque intermédiaire (44) reliée de façon électroconductrice à un branchement électrique du varistor (1).

14. Agencement selon la revendication 13, **caractérisé en ce qu'**une goupille de centrage (52) guidée dans le deuxième espace (26) est encastrée dans la première plaque intérieure (34).

15. Agencement selon l'une des revendications 10 à 14, **caractérisé en ce qu'**une isolation (40) plane est prévue entre l'une des deux plaques extérieures (30) et l'une des deux plaques intérieures (32), et **en ce que** les deux plaques intérieures (32, 34) sont noyées dans une isolation (50) s'étendant entre les deux plaques extérieures (30, 36).
